# EUROPEAN PATENT APPLICATION

(11) **EP 1 980 381 A1**
(43) Date of publication of application: **15.10.2008**
(21) Application number: 07707700.6
(22) Date of filing: 30.01.2007
(51) Int. Cl.: B29C 33/62, B29C 33/68, B32B 27/00, B32B 27/32, C08L 23/00, C09J 7/00

(54) **RELEASABLE RESIN COMPOSITION, MOLDED OBJECT THEREOF, AND LAYERED PRODUCT**

(30) Priority: 02.02.2006 JP 2006025992
(71) Applicant: Nitto Denko Corporation, Ibaraki-shi, Osaka 567-8680 (JP)
(72) Inventor: SAITOU, Maki c/o Mitsubishi Chemical Group Science & Technology Research Center, Inc., Yokohama-shi, Kanagawa 227-8502 (JP); KANAI, Shinichirou, c/o Mitsubishi Chemical Group Science and Technology Research Center, Inc. &, Mie 510-0848 (JP); SEKI, Motohiro, c/o Mitsubishi Chemical Group Science & Technology Research Center Inc., Mie 510-0848 (JP); YAMAMOTO, Satoru c/o Mitsubishi Chemical Group Science & Technology Research Center, Mie 510-0848 (JP); HANAKI, Ikkou c/o Nitto Denko Corporation,, Osaka 567-8680 (JP); HAYASHI, Keiji c/o Nitto Denko Corporation,, Osaka 567-8680 (JP); OKUMURA, Kazuhito c/o Nitto Denko Corporation, Osaka 567-8680 (JP)
(74) Representative: Albrecht, Thomas
(86) International application number: PCT/JP2007/051482
(87) International publication number: WO 2007/088846

(57) **Abstract**

A release resin composition that is excellent in thermal stability, for example, during extrusion molding and does not cause problems such as smoking and foaming during preparation of a compound product or extrusion molding and further does not contaminate metal rollers. The release resin composition can be formed into a release layer that does not cause migration of impurities to an adhesive layer being in direct contact with the release layer and therefore does not decrease the adhesive properties of the adhesive layer. The release resin composition includes a release agent (A) of which main component is a polymer compound having a weight average molecular weight of 10000 to 1000000 and containing an aliphatic group having 8 to 30 carbon atoms and includes a thermoplastic polymer (B) containing an olefin monomer and/or a polar monomer as a constitutional unit, wherein the amount of the release agent (A) is 0.1 to 20 parts by weight to 100 parts by weight of the thermoplastic polymer (B). The release agent (A) shows a 2% weight loss temperature in the range of 260°C or higher but lower than 275°C and a 5% weight loss temperature in the range of 275°C or higher but lower than 330°C in thermogravimetric analysis.

## Description

### Technical Field

The present invention relates to a release resin composition, a molded compact thereof, and a laminate product. More specifically, the present invention relates to a non-silicone release resin composition that is extrusion-moldable and is excellent in thermal stability, a molded compact thereof, and a laminate product including the molded compact.

### Background Art

In conventional methods, release layers, such as release layers of separators and back surface treatment layers of adhesive tapes, are formed by coating a release agent solution on a base material such as a film or paper and drying the solution. However, recently, solvent-free methods have been developed from environmental consideration and cost reduction requirement. In particular, a release film formed by extrusion molding of a mixture of a polyolefin resin and a release agent has been used as a release base material having sufficient release properties for adhesive faces. The polyolefin resin is well-balanced in physical and chemical characteristics and has good film-forming properties.

Silicone compounds are known as particularly effective release agents when used with polyolefin resins (for example, Japanese Unexamined Patent Application Publication No. 10-44349). However, the silicone compounds may ooze out from release films and migrate to adhesive faces of adhesive sheets or the like. Therefore, harmful effects, such as electrical contact failure, may be caused when a silicone compound is applied to an electronic part, for example. In addition, for example, it has been pointed out that disadvantages, such as "cissing" and low print quality during a coating process, are caused when a release film containing a silicone compound is used as a surface protective film for a vehicle body not having been yet coated. Consequently, a non-silicone release agent is required to be developed.

A known non-silicone release agent in which the above-mentioned disadvantages are improved is a long-chain alkyl urethane release agent composed of a reaction product of an active hydroxyl group-containing vinyl polymer and a long-chain alkyl isocyanate compound (for example, Japanese Patent Publication Nos. 2-7988 and 60-30355). Furthermore, an adhesive tape or sheet having a release layer that includes a composition containing such a urethane release agent and a polyolefin resin is known (for example, Japanese Unexamined Patent Application Publication No. 11-43655).

However, the above-mentioned known urethane release agent is poor in thermal stability and therefore is thermally decomposed during preparation of a compound product or extrusion molding to generate impurities of low molecular weights, resulting in occurrence of problems such as smoking, foaming, and metal roller contamination. In addition, when a release layer containing this release agent and an adhesive layer are laminated so as to face each other, the impurities migrate from the release layer to the adhesive face of the adhesive layer to cause problems such as a decrease in the adhesive properties. Therefore, the release agent is not necessarily satisfactory.
Patent Document 1: Japanese Unexamined Patent Application Publication No. 10-44349
Patent Document 2: Japanese Patent Publication No. 2-7988
Patent Document 3: Japanese Patent Publication No. 60-30355
Patent Document 4: Japanese Unexamined Patent Application Publication No. 11-43655

### Summary of Invention

The present invention has been completed under the above-mentioned circumstances. It is an object of the present invention to provide a release resin composition that is excellent in thermal stability, for example, during extrusion molding and does not cause problems such as smoking and foaming during preparation of a compound product or extrusion molding and further does not contaminate metal rollers. The release resin composition can be formed into a release layer that does not cause migration of impurities to an adhesive layer being in direct contact with the release layer and therefore does not cause a decrease in the adhesive properties. It is another object of the present invention to provide a molded compact composed of this release resin composition and a laminate product containing the molded compact.

The present inventors have conducted intensive studies to solve the above-mentioned problems and, as a result, have found the fact that the objects of the present invention can be achieved by blending a thermoplastic polymer (B) and a release agent (A) of which main component is a non-silicone long-chain aliphatic polymer compound excellent in thermal stability in a specific range. The present invention has been completed based on this finding.

That is, the release resin composition according to the present invention includes a release agent (A) of which main component is a polymer compound having a weight average molecular weight of 10000 to 1000000 and containing an aliphatic group having 8 to 30 carbon atoms and includes a thermoplastic polymer (B) containing an olefin monomer and/or a polar monomer as a constitutional unit, wherein the amount of the release agent (A) is 0.1 to 20 parts by weight to 100 parts by weight of the thermoplastic polymer (B). The release agent (A) shows a 2% weight loss temperature in the range of 260°C or higher but lower than 275°C and a 5% weight loss temperature in the range of 275°C or higher but lower than 330°C in thermogravimetric analysis.

The molded compact according to the present invention is formed by extrusion molding of this release resin composition.

The laminate product according to the present invention includes the molded compact, a base material sheet, and/or an adhesive sheet.

### Detailed Description of the Invention

A release agent (A) used in the present invention shows a 2% weight loss temperature in the range of 260°C or higher but lower than 275°C and a 5% weight loss temperature in the range of 275°C or higher but lower than 330°C in thermogravimetric analysis and thus is excellent in thermal stability. Therefore, with a release resin composition of the present invention containing such a release agent (A) at a specific proportion to a thermoplastic polymer (B), a release layer can be formed without causing problems such as smoking or foaming of the resin composition during preparation of a compound product or extrusion molding and without causing metal roller contamination. The release layer does not cause migration of impurities from the release layer to an adhesive layer facing the release layer and therefore does not have a problem of causing a decrease in adhesive properties.

The release resin composition of the present invention includes a release agent (A) of which main component is a polymer compound (hereinafter referred to as "polymer compound (a)") having a weight average molecular weight of 10000 to 1000000 and containing an aliphatic group having 8 to 30 carbon atoms and includes a thermoplastic polymer (B).

Here, the term "a release agent (A) contains the above-mentioned specific polymer compound (a) as the main component" means that the amount of the polymer compound (a) contained in the release agent (A) is 80% by weight or more and preferably 90% by weight or more.

The polymer compound (a) as the main component of the release agent (A) according to the present invention is a polymer compound having a weight average molecular weight of 10000 to 1000000 and containing an aliphatic group (long-chain hydrocarbon group) having 8 to 30 carbon atoms. Preferably, the aliphatic group has 12 to 22 carbon atoms, and the weight average molecular weight is 20000 to 1000000. A polymer compound (a) of which aliphatic group has less than eight carbon atoms may impart insufficient release properties to a release agent (A). A polymer compound (a) of which aliphatic group has more than 30 carbon atoms is inferior in reactivity during the preparation of a release agent (A), and thereby a desired structure may not be obtained. Furthermore, a polymer compound (a) having a weight average molecular weight less than 10000 may migrate to an adhesive face when the release resin composition is applied (peeled off) and thereby may decrease the adhesive properties. A polymer compound (a) having a weight average molecular weight exceeding 1000000 is hardly dispersed in a thermoplastic polymer (B) described below and thereby may not impart favorable release properties to the release resin composition.

From the viewpoint of improvement of molding workability, the release agent (A) shows a 2% weight loss temperature in the range of 260°C or higher but lower than 275°C and a 5% weight loss temperature in the range of 275°C or higher but lower than 330°C and preferably in the range of 280°C or higher but lower than 330°C in thermogravimetric analysis. When the 2% weight loss temperature is lower than 260°C or the 5% weight loss temperature is lower than 275°C, low-molecular-weight impurities generated by thermal decomposition during molding processing may cause problems such as smoking, foaming, and metal roller contamination. Furthermore, the low-molecular-weight impurities may migrate to an adhesive face and decrease the release properties of an adhesive layer being in direct contact with the release resin composition of the present invention.

The 2% or 5% weight loss temperature is a temperature at which the weight of a sample measured with a thermogravimetric analyzer is reduced by 2% or 5% when sample temperature is increased at a rate of 10°C/min from room temperature to 700°C in a nitrogen atmosphere (100 mL/min).

The release agent (A) can be prepared by a reaction of a polymer having a reactive group and a compound being able to react with the reactive group of the polymer and containing an aliphatic group having 8 to 30 carbon atoms in an appropriate heated solvent in the absence of a catalyst or in the presence of a catalyst, such as a tin compound or a tertiary amine, according to necessity.

Examples of the reactive group include a hydroxyl group, an amino group, a carboxyl group, and a maleic anhydride group, and examples of the polymer having such a reactive group include polyvinyl alcohols, ethylene-vinyl alcohol copolymers, polyethyleneimines, polyethyleneamines, and styrene-maleic anhydride copolymers. Here, the term "polyvinyl alcohols" include partially saponified polyvinyl acetates, and the term "ethylene-vinyl alcohol copolymers" include partially saponified ethylene-vinyl acetate copolymers.

Examples of the aliphatic group having 8 to 30 carbon atoms of the reactive compound include a lauryl group, a stearyl group, and a behenyl group, and examples of the reactive compound include acid chlorides, isocyanates, amines, and alcohols.

In particular, the main component of the release agent (A) is preferably a releasable polymer compound prepared by utilizing a reaction of an aliphatic isocyanate. The aliphatic isocyanate is, for example, composed of an isocyanate group and an aliphatic group such as an alkyl group having eight carbon atoms or more, and examples of the aliphatic isocyanate include octyl isocyanate, decyl isocyanate, lauryl isocyanate, and stearyl isocyanate. The polymer having a reactive group to react with the above-mentioned aliphatic isocyanate is preferably an ethylene-vinyl alcohol copolymer.

In particular, the polymer compound (a) as the main component of the release agent (A) is preferably a urethane compound prepared by a urethane reaction of an aliphatic isocyanate represented by the following general formula [1] (hereinafter referred to as "aliphatic isocyanate [1]") and an ethylene-vinyl alcohol copolymer. That is, a compound prepared by a reaction of an aliphatic isocyanate [1] and an ethylene-vinyl alcohol copolymer is preferred.

R-NCO [1]

(where R represents a linear or branched aliphatic group having 8 to 30 carbon atoms, and the aliphatic isocyanate may be a mixture of two or more different kinds of isocyanates of which R's are different).

The release agent (A) prepared by the urethane reaction of an aliphatic isocyanate [1] and an ethylene-vinyl alcohol copolymer will now be described.

The aliphatic group (chain hydrocarbon group) of the aliphatic isocyanate [1] is not particularly limited, and is, for example, an alkyl group, an alkenyl group, or an alkynyl group and preferably an alkyl group. The aliphatic group may be branched, but a linear aliphatic group is preferred. The number of carbon atoms of the aliphatic group is necessarily eight or more for ensuring the release properties of a resulting release agent (A), but the upper value is not particularly limited. In general, the number of carbon atoms of the aliphatic group of the aliphatic isocyanate [1] is preferably 30 or less and more preferably 20 or less in order to enhance reactivity in the urethane reaction.

The urethane reaction may be performed by using one kind of aliphatic isocyanate [1] or a combination of two or more kinds of aliphatic isocyanates [1].

Specifically, the aliphatic isocyanate [1] is, for example, a monoalkyl isocyanate such as octyl isocyanate or dodecyl isocyanate and preferably octadecyl isocyanate (stearyl isocyanate).

Typically, the octadecyl isocyanate is commercially available as a mixture of octadecyl isocyanate containing an alkyl group having 18 carbon atoms as the main component and monoalkyl isocyanates of which alkyl groups have 12 carbon atoms, 14 carbon atoms, 16 carbon atoms, 17 carbon atoms, or 20 carbon atoms. The mixture contains 1 to 10% by weight of isocyanate containing an alkyl group having 16 carbon atoms, 0.5 to 4% by weight of isocyanate containing an alkyl group having 17 carbon atoms, and 80 to 98% by weight of isocyanate containing an alkyl group having 18 carbon atoms, and preferably contains 8 to 9% by weight of isocyanate containing an alkyl group having 16 carbon atoms, 3 to 4% by weight of isocyanate containing an alkyl group having 17 carbon atoms, and 85 to 87% by weight of isocyanate containing an alkyl group having 18 carbon atoms. Such a mixture is available, for example, from Hodogaya Chemical Co., Ltd., under the trade name Millionate O.

Furthermore, the constitution of the ethylene-vinyl alcohol copolymer is not particularly limited, and it is preferable that the weight average molecular weight be 10000 to 500000. In an ethylene-vinyl alcohol copolymer having a weight average molecular weight less than 10000, a urethane reaction product prepared therefrom has insufficient crystalline properties. Therefore, sufficient release properties may not be obtained when used as a release agent. On the other hand, when the weight average molecular weight exceeds 500000, the solubility in a nonpolar organic solvent is decreased during the manufacturing of a urethane reaction product. Therefore, a desired constitution may not be obtained.
Furthermore, the ethylene-vinyl alcohol copolymer preferably contains 20 to 60% by mole, preferably, 30 to 60% by mole of ethylene unit. An ethylene-vinyl alcohol copolymer containing the ethylene unit exceeding 60% by mole may impart to a release agent (A) as the reaction product insufficient release properties. An ethylene-vinyl alcohol copolymer containing the ethylene unit less than 20% by mole may impart to a release agent (A) as the reaction product insufficient compatibility with a thermoplastic polymer (B) described below, and thereby the release agent (A) hardly dispersed in the thermoplastic polymer (B) and may not obtain favorable release properties.

Commercially available ethylene-vinyl alcohol copolymers suitable for the present invention are, for example, those from Kuraray Co., Ltd. under the trade name Eval: grades E-171B, E-151B, and E-105B and from Nippon Synthetic Chemical Industry Co., Ltd. under the trade name Soarnol: grades AT4403, AT4406, and A4412.

The ethylene-vinyl alcohol copolymer may be a mixture of two or more kinds of copolymers different in weight average molecular weight or in content of the ethylene unit.

The urethane reaction according to the present invention is conducted by reacting an aliphatic isocyanate [1] and an ethylene-vinyl alcohol copolymer wherein the equivalent ratio of the isocyanate group of the aliphatic isocyanate [1] to the hydroxyl group of the ethylene-vinyl alcohol copolymer (hereinafter referred to as "NCO/OH ratio") is preferably 0.5 to 1.0. If this NCO/OH ratio in the reaction is lower than 0.5 equivalents, not only the manufacturing is difficult, but also the yield of the desired polymer compound (a) is decreased, resulting in economical disadvantages. If the ratio exceeds 1.0 equivalent, impurities described below are apt to be produced by a reaction of unreacted aliphatic isocyanate [1] and water, and also an allophanate compound having lower thermal stability is apt to be produced.

In the release agent (A) prepared by the reaction of an aliphatic isocyanate [1] and an ethylene-vinyl alcohol copolymer, the total amount of compounds represented by the following general formula [2] (hereinafter referred to as "impurity [2]") and compounds represented by the following general formula [3] (hereinafter referred to as "impurity [3]") is preferably 0.01% by weight or more and less than 1% by weight:

R-NHCO-NH-R [2]

R-N(CO-NH-R)₂ [3]

(where R represents a linear or branched aliphatic group having eight or more carbon atoms derived from the aliphatic group of the aliphatic isocyanate [1]; and when a plurality of R's is present in one molecule, the R's may be the same or different).

When the total amount of the impurity [2] and the impurity [3] is higher than 1% by weight, the adhesive properties of an adhesive layer may be decreased by migration of the impurities as described above. A lower total amount of the impurity [2] and the impurity [3] in the release agent (A) is better. The total amount is preferably lower than 0.5% by weight and more preferably lower than 0.4% by weight. However, a total amount less than 0.01% by weight is substantially difficult to achieve. Consequently, the lower limit is 0.01% by weight.

The total amount of the impurity [2] and the impurity [3] is shown by a percentage denoting the proportion of the peak area of components having a polystyrene-converted molecular weight not higher than the molecular weight shown by the valley (minimum) near 3.0 × 10³ to the total peak area in a molecular weight distribution curve obtained by gel permeation chromatography (GPC) of a sample.

The amount of isocyanate added in the release agent (A) prepared by the reaction of an aliphatic isocyanate [1] and an ethylene-vinyl alcohol copolymer is preferably 20 to 50% by mole and more preferably 30 to 50% by mole. If the amount of isocyanate added is less than 20% by mole, the release properties may be insufficient. Furthermore, since a urethane bond has low thermal resistance, if the amount of isocyanate added exceeds 50% by mole, the amount of low-molecular-weight impurities generated by thermal decomposition during molding processing may increase.

The amount of isocyanate added can be determined by primary structure analysis by ¹³C-NMR.

The thermoplastic polymer (B) according to the present invention is a polymer containing an olefin monomer and/or a polar monomer as a constitutional unit and is not particularly limited. Typically, the thermoplastic polymer (B) is polyethylene, polypropylene, an ethylene/α-olefin copolymer, or an ethylene/polar monomer copolymer. These compounds may be used alone or as a mixture of several kinds thereof. The α-olefin of the ethylene/α-olefin copolymer has about 3 to 20 carbon atoms, and examples thereof include propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicocene. Alpha-olefin used as the comonomer may be one kind of α-olefin or a combination of two or more kinds of α-olefins. Examples of the polar monomer of the ethylene/polar monomer copolymer include vinyl acetate, vinyl alcohol, various (metha)acrylates such as (metha)acrylic acid and methyl(metha)acrylate, and maleic anhydride. These compounds may be used alone or as a mixture of two or more kinds thereof. In particular, vinyl acetate and methyl acrylate are preferred.

The thermoplastic polymer (B) preferably has a density of 0.88 to 0.95 g/cc and a melt index (hereinafter referred to as "MI") of 0.1 to 100 g/10 min. In a thermoplastic polymer (B) having a density less than 0.88 g/cc, the thermal resistance is poor and the release properties may be decreased by being used in high-temperature environment. In a thermoplastic polymer (B) having a density exceeding 0.95 g/cc, the release properties may be poor. In addition, in a case of an MI less than 0.1 g/10 min, the fluidity is poor and thereby melt molding is difficult. In a case of an MI exceeding 100 g/10 min, the fluidity is too high and thereby uniform melt-molding is difficult. The MI in the present invention is a value determined in accordance with JIS K6922-2, JIS K6924-2, or JIS K7210, for example.

In the release resin composition according to the present invention, the weight ratio of the release agent (A) is 0.1 to 20 parts by weight to 100 parts by weight of the thermoplastic polymer (B). When the ratio of the release agent (A) is less than 0.1 parts by weight, the release properties are insufficient. When the ratio exceeds 20 parts by weight, the properties are saturated and therefore not only it is economically disadvantageous but also molding workability is decreased by poor dispersion that is caused depending on compatibility with the thermoplastic polymer (B). In addition, a release layer containing such a release resin composition may cause cohesive failure during the application (peeling off).

The release resin composition according to the present invention may contain various additives, according to necessity, in addition to the release agent (A) and the thermoplastic polymer (B). The additives, such as a defoaming agent, a coating property-improving agent, a thickener, a surfactant, a lubricant, organic particles, inorganic particles, an antioxidant, an ultraviolet ray absorber, a dye, a pigment, another polymer compound, and a cross-linking agent, may be contained in ranges that do not impair the object of the present invention.

The release resin composition according to the present invention is mainly molded by melt-extrusion and used as a molded compact (release film or release sheet). In addition, the release resin composition according to the present invention may be molded by co-extrusion with a base material or molded by extrusion lamination on a base material and may be used as a laminate product having a release layer composed of the release resin composition of the present invention. Furthermore, the laminate product may be a multi-layer product formed by co-extrusion molding of three or more layers, such as a three-layer product formed by simultaneously providing a release layer on one surface of a base material and an adhesive layer on the other surface of the base material.

The molded compact according to the present invention may be produced by any melt-extrusion method without particular limitation, i.e., a non-drawing method or a drawing method in at least one axis by a known method. For example, in a case of producing a release film as a molded compact, a pellet of a release resin composition constituting the release film is produced and then is extrusion-molded into a film form using a melt extruder. The thickness of the release film is not particularly limited as long as it can be extrusion-molded and is usually 0.1 to 100 µm and preferably 0.5 to 20 µm. In a case of a thickness less than 0.1 µm, it is difficult to form a film having uniform thickness and thereby the release properties may be poor. In a case of a thickness exceeding 100 µm, the advantageous effect may not increase with the thickness, which is economically disadvantageous.

In a case that the production process of the laminate product includes post-processing such as drawing under heating, the thickness of the resulting release layer is not limited to the above-mentioned value. The thickness should be adjusted by, for example, regulating drawing magnification to a thickness that can give sufficient release properties after drawing. The thickness of the release layer after the drawing is preferably 0.01 to 5 µm.

The specific laminate configuration of the laminate product is, for example, release film (or release layer)/base material sheet, release film (or release layer)/adhesive sheet (or adhesive layer), release film (or release layer)/base material sheet/adhesive sheet (or adhesive layer), release film (or release layer)/adhesive sheet (or adhesive layer)/base material sheet, or base material sheet/release film (or release layer)/adhesive sheet (or adhesive layer). In the present invention, the laminate configuration may be a double-sided release film or a double-sided adhesive sheet. Specifically, the laminate configuration is, for example, release film (or release layer)/base material sheet/release film (or release layer) or release film (or release layer)/adhesive sheet (or adhesive layer)/base material sheet/adhesive sheet (or adhesive layer)/release film (or release layer). A proper configuration is arbitrarily selected from these configurations according to the intended use.

The release resin composition according to the present invention may be formed into a film by dissolving the release resin composition in a solution, applying the solution on a surface of a base material, and drying it at an appropriate temperature for an appropriate time. Furthermore, a base material and/or an adhesive layer for a laminate product may be laminated by any known process such as coating as well as melt-molding such as extrusion molding or laminate molding.

The thus obtained laminate films and sheets can be used as release films and sheets or adhesive films and sheets. Specifically, the laminate films and sheets can be used, for example, as adhesive tapes, cloth adhesive tapes, craft tapes, or surface protective films and can be stored in either a roll or sheet form.

### Examples

The present invention will now be described in further detail with reference to Examples, but is not limited to the following Examples within the scope of the present invention.
Hereinafter, the term "part(s)" means "part(s) by weight".

The processes for analyzing release agents and thermoplastic polymers used in exemplary examples below are as follows:
(1) Weight average molecular weight of polymer compound: Evaluation by a GPC method was carried out using a device "HLC8020" manufactured by Tosoh Corporation (solvent: tetrahydrofuran, temperature: 40°C, flow rate: 1.0 mL/min, column: PLgel 10 µm MIXED-B, 30 cm × 2, detector: RI (built-in device)). The weight average molecular weight of polymer compound was a weight average molecular weight of components having molecular weights higher than the molecular weight shown by the valley (minimum) present near a polystyrene-converted molecular weight of 3.0 × 10³ in a given molecular weight distribution curve.

(2) 2% or 5% weight loss temperature of release agent: Evaluation by thermogravimetric analysis was carried out using a device "Thermo Plus TG8120" manufactured by Rigaku Corporation. The 2% or 5% weight loss temperature was a temperature at which the weight of a release agent (A) was reduced by 2% or 5% when the temperature was increased at a rate of 10°C/min in a nitrogen gas flow of 100 mL/min.

(3) Total amount of impurity [2] and impurity [3] contained in release agent: Evaluation by a GPC method was carried out using a device "HLC-8020" manufactured by Tosoh Corporation (solvent: tetrahydrofuran, temperature: 40°C, flow rate: 1.0 mL/min, column: three columns, G-6000, G-4000, and G-2500, in total, detector: RI (built-in device)). The total amount was shown by a percentage denoting the proportion of the peak area of components having a polystyrene-converted molecular weight not higher than the molecular weight shown by the valley (minimum) present near 3.0 × 10³ to the total peak area in a given molecular weight distribution curve.

(4) Weight average molecular weight of ethylene-vinyl alcohol copolymer: Evaluation by a GPC method was carried out using a device "HLC-8220" manufactured by Tosoh Corporation (solvent: dimethylacetamide, temperature: 40°C, flow rate: 10 mL/min, column: Tosoh TSKgel GMHhr-M, 30 cm × 2, detector: RI (built-in device)). The weight average molecular weight was a value given by polystyrene conversion.

(5) Amount of isocyanate added in release agent: Evaluation by a ¹³C-NMR method was carried out using a device "Unity 400" manufactured by Varian, Inc. (solvent: heavy toluene, temperature: 40°C). In the given ¹³C-NMR spectrum, a carbamate modification ratio of a vinyl alcohol unit in an ethylene-vinyl alcohol copolymer was calculated based on the proportion of an integrated intensity of a signal near 157 ppm derived from a carbamate carbonyl group to an integrated intensity of a signal near 70 ppm derived from -CHO-. The amount was shown by % by mole denoting the product of the carbamate modification ratio and a content of the vinyl alcohol unit in the ethylene-vinyl alcohol copolymer.

(6) Density of thermoplastic polymer: Measurements were carried out in accordance with JIS K6922-1 and 2 (ethylene polymer, ethylene-vinyl acetate copolymer) and JIS K7112 (polypropylene).

(7) MI of thermoplastic polymer: The MI's of an ethylene polymer and an ethylene-vinyl acetate copolymer were measured at a test temperature of 190°C and a load of 2.16 kgf, and the MI of polypropylene was measured at a test temperature of 230°C and a load of 2.16 kgf, in accordance with JIS K6922-2' (ethylene polymer), JIS K6924-2 (ethylene-vinyl acetate copolymer), and JIS K7210 (polypropylene).

### [Preparation of release agent]

The release agents used in the following exemplary examples were prepared as follow:

### <Preparation example 1>

Hundred parts of ethylene-vinyl alcohol copolymer (trade name: "Eval E-171B" manufactured by Kuraray Co., Ltd., ethylene unit: 44% by mole, weight average molecular weight: 9.17 × 10⁴) were dispersed in 1160 parts of toluene. The mixture was refluxed for two hours while removing moisture in the middle of a reflux device. Then, the mixture was cooled to 40°C, and 280 parts of dimethylsulfoxide were added thereto. Then, 269 parts of octadecyl isocyanate (trade name: "Millionate O" manufactured by Hodogaya Chemical Co., Ltd.) were dropwise added to the mixture under stirring so that the equivalent ratio of the isocyanate group to the hydroxyl group of the ethylene-vinyl alcohol copolymer was 0.6. The resulting mixture was subjected to reaction at 120°C for 4 hours. During the reaction, the remaining isocyanate group in the system was quantitatively measured with an infrared spectrophotometer (near 2260 cm⁻¹), and the point at which the remaining isocyanate group disappeared was determined as the endpoint.

After completion of the reaction, 280 parts of water were added to the reaction solution for solution separation. The reaction solution of the toluene layer was dehydrated by azeotrope at 110°C for 1 hour and then was subjected to pressure filtration at 30°C. The resulting filtrate was poured into 3440 parts of methanol to give a white precipitate. The precipitate was separated by filtration, washed with methanol, centrifuged for drying, and then pulverized to give 350 parts of the desired release agent (A) (hereinafter referred to as "release agent (A-1)").

This release agent (A-1) had a weight average molecular weight of 1.41 × 10⁵. The total amount of the impurity [2] and the impurity [3] was 0.08% by weight. The amount of isocyanate added was 32% by mole. The 2% and 5% weight loss temperatures were 263°C and 278°C, respectively.

### <Preparation example 2>

A release agent (A) (hereinafter referred to as "release agent (A-2)") was prepared as in preparation example 1 except that an ethylene-vinyl alcohol copolymer (trade name: "Eval E-151B" manufactured by Kuraray Co., Ltd., ethylene unit: 44% by mole, weight average molecular weight: 1.23 × 10⁵) was used instead of the ethylene-vinyl alcohol copolymer used in preparation example 1. The release agent (A-2) had a weight average molecular weight of 1.59 × 10⁵. The total amount of the impurity [2] and the impurity [3] was 0.11% by weight. The amount of isocyanate added was 34% by mole. The 2% and 5% weight loss temperatures were 265°C and 282°C, respectively.

### <Preparation example 3>

Hundred parts of an ethylene-vinyl alcohol copolymer (trade name: "Eval E-151B" manufactured by Kuraray Co., Ltd., ethylene unit: 44% by mole, weight average molecular weight: 1.23 × 10⁵) and 5 parts of dibutyl tin dioctylate were dispersed in 413 parts of xylene. The mixture was heated to 140°C, and 493 parts of octadecyl isocyanate were dropwise added thereto while stirring so that the equivalent ratio of the isocyanate group to the hydroxyl group of the ethylene-vinyl alcohol copolymer was 1.1. The resulting mixture was subjected to reaction at 140°C for 12 hours.

After completion of the reaction, the mixture was cooled to 80°C and filtrated. The filtrate was diluted with 1100 parts of xylene, and the resulting mixture was poured into 5650 parts of acetone to give a white precipitate. The precipitate was filtered while washing with acetone and dried in vacuum at 60°C to give 560 parts of the desired compound (hereinafter referred to as "release agent (X-1)").

This release agent (X-1) had a weight average molecular weight of 2.14 × 10⁵. The total amount of the impurity [2] and the impurity [3] was 1.76% by weight. The amount of isocyanate added was 51% by mole. The 2% and 5% weight loss temperatures were 242°C and 259°C, respectively.

### [Examples and Comparative Examples]

### <Example 1>

A release resin pellet was prepared by melt-kneading 10 parts of the release agent (A-1) obtained in preparation example 1 and 100 parts of low-density polyethylene (trade name: "Novatec LD LC720" manufactured by Japan Polyethylene Corporation, density: 0.922 g/cc, MI = 9.4 g/10 min) (hereinafter referred to as "LDPE-1") using a two-axis kneader ("KZW15" manufactured by Technovel Corporation) at a resin temperature of 160°C. This release resin pellet was melt-extruded into a film form with a width of 150 mm and a thickness of 50 µm from a T die at a resin temperature of 260°C using an extruder with a diameter of 15 mm. A cloth base material previously laminated with a low-density polyethylene having a thickness of 50 µm (trade name "Novatec LD LC607" manufactured by Japan Polyethylene Corporation) (hereinafter referred to as "LDPE-2") so as to have an anchor coat layer therebetween was dispensed from a base material dispensing portion of an extrusion laminator. This cloth base material and the above-mentioned release resin melt-extruded into a film form were guided to a press roller and a cooling roller for press lamination to obtain a laminate sheet of release layer/base material.

### <Example 2>

A laminate sheet of release layer/base material was prepared as in Example 1 except that 20 parts of the release agent (A-1) were used.

### <Example 3>

A laminate sheet of release layer/base material was prepared as in Example 1 except that the release agent (A-2) prepared in preparation example 2 was used as the release agent (A).

### <Example 4>

A release resin pellet was prepared as in Example 1 by melt-kneading 10 parts of the release agent (A-1) prepared in preparation example 1, 90 parts of LDPE-1, and 10 parts of an ethylene-vinyl acetate copolymer (trade name: "Novatec EVA LV440" manufactured by Japan Polyethylene Corporation, density: 0.937 g/cc, MI = 2.0 g/10 min) (hereinafter referred to as "EVA").
This release resin pallet was melt-extruded into a film form with a width of 150 mm from a T die at a resin temperature of 200°C using an extruder with a diameter of 15 mm to obtain a monolayer release film having a thickness of 50 µm.

### <Example 5>

A release resin pellet was prepared by melt-kneading two parts of the release agent (A-2) prepared in preparation example 2 and 100 parts of polypropylene (trade name: "Novatec PP FB3HAT" manufactured by Japan Polypropylene Corporation, density: 0.90 g/cc, MI = 7.5 g/10 min) (hereinafter referred to as "PP") at a resin temperature of 200°C using a two-axis kneader ("KZW15" manufactured by Technovel Corporation).
This release resin pellet was melt-extruded into a film form with a width of 150 mm from a T die at a resin temperature of 210°C using an extruder with a diameter of 15 mm to obtain a monolayer release film with a thickness of 50 µm.

### <Example 6>

The release resin pellet prepared in Example 1 and a pellet of a linear low-density polyethylene (trade name: "Novatec C6 SF8402" manufactured by Japan Polyethylene Corporation, density: 0.929 g/cc, MI = 2.6 g/10 min) (hereinafter referred to as "LLDPE") were formed into a laminate sheet of release layer/base material by two-layer co-extrusion molding at a resin temperature of 200°C. On this laminate sheet, a toluene solution of a rubber adhesive agent composed of a polyisobutylene having a weight average molecular weight of 650000 was applied and dried at 50°C for 5 minutes to give a three-layer laminate sheet having a 15-µm thick adhesive layer (release layer thickness is 5 µm, base material layer thickness is 35 µm, and adhesive layer thickness is 15 µm).

### <Example 7>

A three-layer laminate sheet composed of release layer/base material/adhesive layer was prepared by the calendar molding of a natural rubber adhesive agent onto the base material of the laminate sheet prepared in Example 1 at the opposite side of the release layer at 80°C so as to have a thickness of 40 µm.

### <Example 8>

A three-layer laminate sheet composed of a release layer, a base material layer, and an adhesive layer laminated in this order and having a total thickness of 70 µm (release layer thickness is 5 µm, base material layer thickness is 50 µm, and adhesive layer thickness is 15 µm) was prepared by three-layer co-extrusion molding at a resin temperature of 200°C. The release layer was composed of the release resin pellet prepared in Example 1. The base material layer was composed of low-density polyethylene (trade name: "Novatec LD LF443" manufactured by Japan Polyethylene Corporation, density: 0.924 g/cc, MI = 1.5 g/10 min). The adhesive layer was composed of a mixture of 100 parts of styrene/ethylene-propylene copolymer/styrene block copolymer (trade name: "Septon 2063" manufactured by Kuraray Co., Ltd.) and 30 parts of hydrogenated terpene adhesive-imparting agent (trade name: "Clearon P105" manufactured by Yasuhara Chemical Co., Ltd.).

### <Comparative Example 1>

A laminate sheet composed of release layer/base material was prepared as in Example 1 except that 30 parts of the release agent (A-1) were used.

### <Comparative Example 2>

A laminate sheet composed of release layer/base material was prepared as in Example 1 except that the release agent (X-1) prepared in preparation example 3 was used instead of the release agent (A-1) used in Example 1.

### <Comparative Example 3>

A laminate sheet composed of release layer/base material was prepared as in Example 1 except that a commercially available urethane release agent (trade name: "Peeloyl 1010S" manufactured by Ipposha Oil Industries Co., Ltd., 2% and 5% weight loss temperatures: 100°C or less in both, total amount of impurity [ 2] and impurity [ 3] : 3.27% by weight) was used instead of the release agent (A-1) used in Example 1.

### <Comparative Example 4>

A laminate sheet composed of release layer/base material was prepared as in Example 1 except that a commercially available urethane release agent (trade name: "Ashioresin RA-80" manufactured by Ashio Co., Ltd., 2% and 5% weight loss temperatures: 254°C and 268°C, respectively, total amount of impurity [ 2] and impurity [ 3] : 0.59% by weight) was used instead of the release agent (A-1) used in Example 1.

### <Comparative Example 5>

LDPE-1 was melt-extruded into a film form having a width of 150 mm and a thickness of 50 µm from a T die at a resin temperature of 260°C using an extruder having a diameter of 15 mm. A cloth base material previously laminated with LDPE-2 having a thickness of 50 µm so as to have an anchor coat layer therebetween was dispensed from a base material dispensing portion of an extrusion laminator. This cloth base material and the above-mentioned LDPE-1 melt-extruded into a film form were guided to a press roller and a cooling roller for press lamination to obtain a laminate sheet composed of LDPE-1 layer/base material.

### <Comparative Example 6>

PP was melt-extruded into a film form having a width of 150 mm from a T die at a resin temperature of 210°C using an extruder having a diameter of 15 mm to obtain a monolayer film with a thickness of 50 µm.

### <Comparative Example 7>

A pellet of LDPE-1 and a pellet of LLDPE were formed into a laminate sheet composed of LDPE-1 layer/base material by two-layer co-extrusion molding at a resin temperature of 200°C. On this laminate sheet, a toluene solution of a rubber adhesive agent composed of polyisobutylene with a weight average molecular weight of 650000 was applied and dried at 50°C for 5 minutes to give a three-layer laminate sheet having a 15-µm thick adhesive layer (LDPE-1 layer thickness is 5 µm, base material layer thickness is 35 µm, and adhesive layer thickness is 15 µm).

### <Comparative Example 8>

A three-layer laminate sheet composed of LDPE-1 layer/base material/adhesive agent layer was prepared by the calendar molding of a natural rubber adhesive agent onto the base material of the laminate product prepared in Comparative Example 5 at the opposite side of the LDPE-1 layer at 80°C so as to have a thickness of 40 µm.

The resin compositions, molded compacts, and laminate sheets prepared in the above-mentioned Examples and Comparative Examples were subjected to the following evaluation. Table 1 shows the results.

### (1) Method for evaluating molding workability

In the above-mentioned molding process, the amount of smoking during the melt-extrusion of a resin composition from a T die at a discharge rate of 1.0 kg/hr was visually observed. No smoking was rated as O, streak-like smoking from a part of the T die was rated as Δ, and strip-like smoking from the entire T die was rated as X.

### (2) Method 1 for evaluating release properties

The molded films and laminate sheets prepared in Examples 1 to 5 and Comparative Examples 1 to 6 were cut into pieces having a width of 30 mm. To each of these pieces (when the laminate sheet has a base material, on the opposite side of the base material), a commercially available adhesive tape (Nitto tape No. 31B manufactured by Nitto Denko Corporation) having a width of 20 mm was press-bonded by reciprocating a rubber roller of 2 kg in weight once. The pieces were left at room temperature for 1 hour, and then strength (average value of five samples) necessary for peeling off the adhesive tape in the direction of 180° at a tensile rate of 300 mm/min was measured as peel strength. Then, the peeled adhesive tape was press-bonded to a SUS430BA plate by reciprocating a rubber roller of 2 kg in weight once. The adhesive tape was left at room temperature for 1 hour, and then strength (average value of five samples) necessary for peeling off the adhesive tape in the direction of 180° at a tensile rate of 300 mm/min was measured as adhesion strength.

### (3) Method 2 for evaluating release properties

Sample pieces were cut out from the three-layer laminate sheets prepared in Examples 6 to 8 and Comparative Examples 7 and 8 so as to have a width of 30 mm and a length of 150 mm. The adhesive face of each of the cut-out sample pieces was attached to a PET film, and the adhesive face of another piece of the sample was further attached thereto. The resulting laminate was press-bonded by reciprocating a rubber roller of 2 kg in weight once. The press-bonded samples were left at room temperature for 1 hour, and then strength (average value of five samples) necessary for peeling off the adhesive tape in the direction of 180° at a tensile rate of 300 mm/min was measured as peel strength. Then, the peeled adhesive tape was press-bonded to a SUS430BA plate by reciprocating a rubber roller of 2 kg in weight once. The adhesive tape was left at room temperature for 1 hour, and then strength (average value of five samples) necessary for peeling off the adhesive tape in the direction of 180° at a tensile rate of 300 mm/min was measured as adhesion strength.

[Table 1]

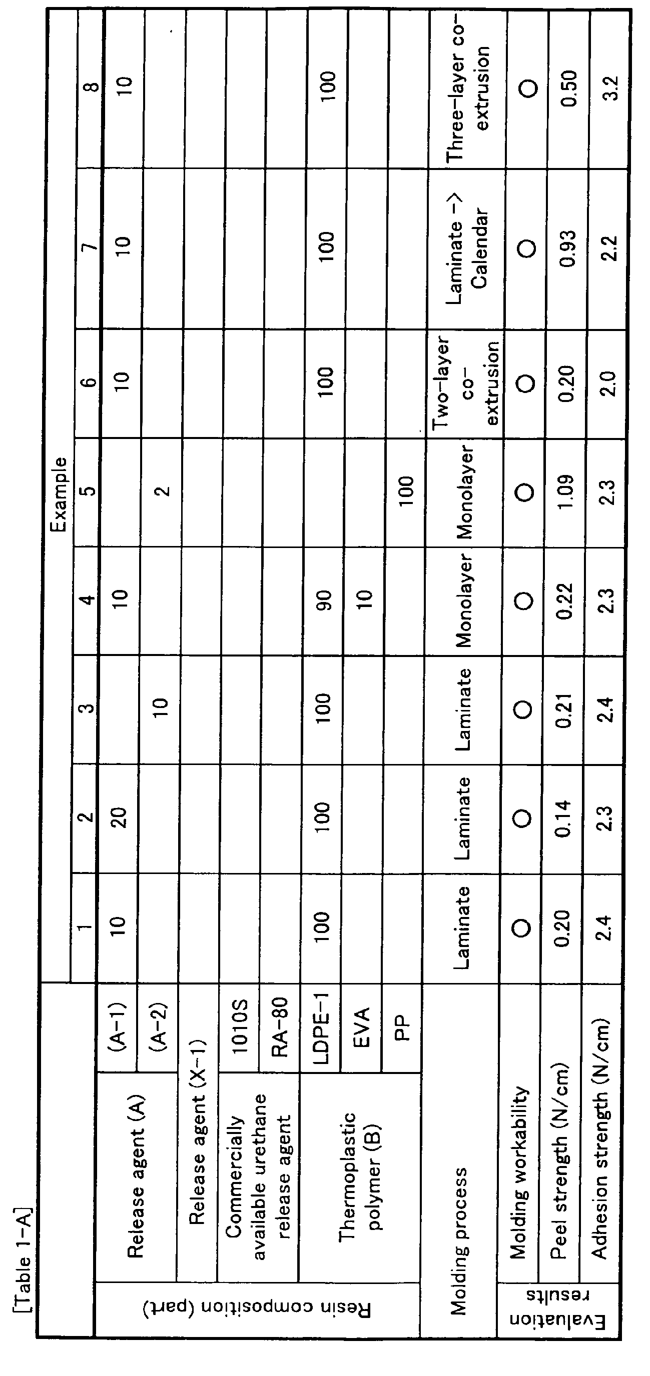

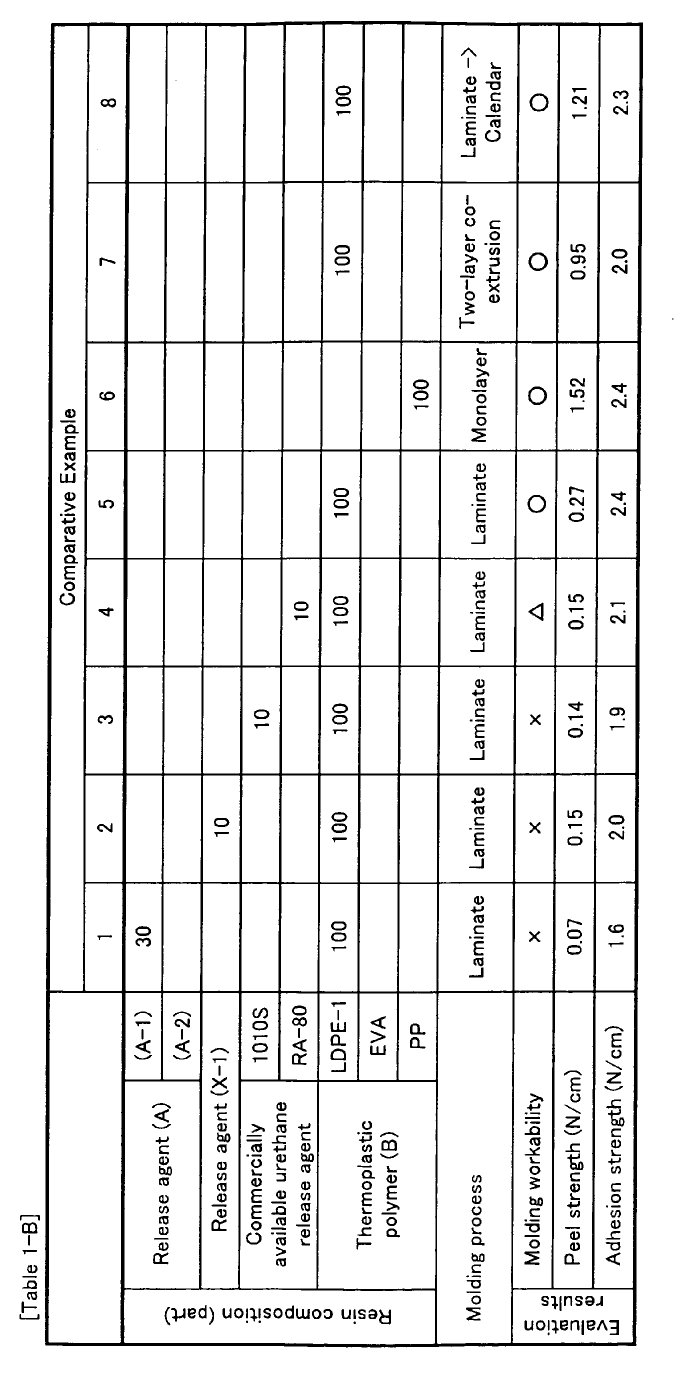

It is confirmed by the results shown in Table 1 that the release resin compositions according to the present invention have thermal stability sufficient for extrusion molding and are excellent in release properties and in characteristics for maintaining adhesion of an adhesive layer being in direct contact with the composition.

The present invention is described in detail with reference to specific examples, and it is apparent to those skilled in the art that a variety of modifications may be made without departing from the spirit and the scope of the present invention.
This application is based on Japanese Application (Application No. 2006-025992) filed on February 2nd, 2006, the entire contents of which are hereby incorporated by reference.

## Claims

1. A release resin composition comprising:
a release agent (A) of which main component is a polymer compound having a weight average molecular weight of 10000 to 1000000 and containing an aliphatic group having 8 to 30 carbon atoms; and
a thermoplastic polymer (B) containing an olefin monomer and/or a polar monomer as a constitutional unit, wherein
the amount of the release agent (A) is 0.1 to 20 parts by weight to 100 parts by weight of the thermoplastic polymer (B); and
the release agent (A) shows a 2% weight loss temperature in the range of 260°C or higher but lower than 275°C and a 5% weight loss temperature in the range of 275°C or higher but lower than 330°C in thermogravimetric analysis.

2. The release resin composition according to Claim 1, wherein the polymer compound as the main component of the release agent (A) is a urethane compound prepared by a reaction of an aliphatic isocyanate represented by the following general formula [1] and an ethylene-vinyl alcohol copolymer:
R-NCO [1]
(wherein R represents a linear or branched aliphatic group having 8 to 30 carbon atoms, and the aliphatic isocyanate may be a mixture of two or more different kinds of isocyanates of which R's are different).

3. The release resin composition according to Claim 2, wherein the release resin (A) includes a compound represented by the following general formula [2] and a compound represented by the following general formula [3] at 0.01% by weight or more but less than 1% by weight in total:
R-NHCO-NH-R [2]
R-N(CO-NH-R)₂ [3]
(wherein R represents a linear or branched aliphatic group having 8 to 30 carbon atoms; when a plurality of R's is present in one molecule, the R's may be the same or different; and the compounds may be each a mixture of two or more different kinds of compounds of which R's are different).

4. The release resin composition according to Claim 2, wherein the ethylene-vinyl alcohol copolymer has a weight average molecular weight of 10000 to 500000 and contains 20 to 60% by mole of the ethylene unit.

5. The release resin composition according to Claim 2, wherein the amount of isocyanate added in the release agent (A) is 20 to 50% by mole.

6. The release resin composition according to Claim 1, wherein the thermoplastic polymer (B) has a density of 0.88 to 0.95 g/cc and a melt index of 0.1 to 100 g/min.

7. A molded compact prepared by the extrusion molding of a release resin composition according to Claim 1.

8. A laminate product comprising a molded compact according to Claim 7, a base material sheet, and/or an adhesive sheet.
